# EUROPEAN PATENT SPECIFICATION

(11) **EP 1 657 456 B1**
(45) Date of publication and mention of the grant of the patent: **05.03.2008**
(21) Application number: 03740516.4
(22) Date of filing: 14.07.2003
(51) Int. Cl.: F16C 11/06, B60R 1/02

(54) **BALL-AND-SOCKET JOINT**
KUGELGELENK
ARTICULATION A ROTULE

(43) Date of publication of application: 17.05.2006
(73) Proprietor: Fico Mirrors, S.A., 08028 Barcelona (ES)
(72) Inventor: LUPO, Elio, I-10093 Collegno (IT)
(74) Representative: Gislon, Gabriele
(86) International application number: PCT/ES2003/000360
(87) International publication number: WO 2005/008084

(56) References cited:
- FR-A1- 2 501 810
- GB-A- 1 353 804
- GB-A- 1 387 663
- US-A- 2 281 097
- US-A- 2 545 406
- US-A- 2 873 130
- US-A- 3 245 706
- US-A- 3 429 598

## Description

This invention relates to a ball and socket joint comprising a male element, having a substantially spherical external surface, and a female element, surrounding at least partially the male element and able to rotate by sliding thereon, the male element being made up of two parts that are independent of one another between which elastic means are arranged that tend to separate the two parts and press them against the female element.

A joint of this type can be used, for example, for assembling a rear view mirror of a vehicle.

### Background to the invention

Conventional ball and socket joints consist of a male element made up of a solid ball, generally metallic, and a female element, which surrounds the ball and can rotate by sliding on the surface of said ball. One of the multiple applications of a ball and socket joint is the assembly of vehicle rear view mirrors, for example, bus rear view mirrors.

The ball is usually joined to a support arm fixed to the vehicle chassis, and the female joint element is joined to the mirror housing, so that the said mirror can be orientated in many different directions vis-a-vis the housing. It is also possible to use more than one ball and socket joint in the rear view mirror support, thus increasing the orientation possibilities of said mirror.

On the one hand, the joint must allow the female element to rotate on the male element or ball when it is desirable to vary the mirror's orientation; but, on the other hand, most of the time the joint remains in the position fixed by the user.

These two conditions require that the friction between the male and female element, and the force required to rotate one element on the other, is precise and constant all the time.

However, the ball and socket joints described tend to loosen over time, for example due to the surfaces wearing down with friction, thermal expansion, etc.

Also, in conventional ball and socket joints it is difficult to adjust the friction or torque values to be used, etc..

In order to overcome this drawback it has been proposed, for example in patent application EP 659608 A1, to insert a cup shaped bushing between the female element and the ball of the joint, and a spring for pressing this bushing against the ball and closing it on said ball.

However, this solution is mechanically complex, since it requires using a special spring owing to the difficulty of housing it in a suitable position, and it generally complicates the shape of the device elements.

Another solution is described in patent application GB-A-1353804, cf. preamble of claim 1, and consists in dividing the ball of the joint in two complementary parts, that can slide with respect to each other, and interpose between both parts a spring that tends to separate them, so that they are always pressed with a certain force against the inner wall of the female element of the joint.

This structure resolves the problem of compensating wear and also facilitates applying a uniform force all the time; however, the force between both parts is only exercised in one direction, and is therefore transferred to the contact between the ball and the female element, so that a greater force of contact exists at one point, or on one circumferential line of the joint, than in the rest of the surface. Consequently, the contact surfaces may wear irregularly, with the relevant problems.

### Description of the invention

This invention has been developed in order to reduce the drawbacks of the prior art, such as those mentioned.

A ball and socket joint according to a first aspect of the invention is characterised in that one of the parts of the male element is a first hollow bushing defined by all of the features of claim 1.

with a substantially semi-spherical shape, having means allowing an expansion of said bushing towards the female element.

This joint configuration makes the contact surface between the female element and the bushing greater than in the prior art: by virtue of an elastic element and thanks to the presence of the means allowing an expansion, the bushing tends to open and to remain pressed in a more uniform manner, along a wide peripheral strip, against the inner surface of the female element.

Thanks to this improved contact, the joint elements wear more uniformly, and a constant, uniform torque can be guaranteed all the time.

Moreover, the hollow configuration of the bushing reduces the weight of the joint.

Also it is worth highlighting that the joint according to the invention makes it possible to maintain a constant stabilisation and adjustment torque, which is a very important condition for accurately regulating the position of a rear view mirror. On the contrary, in the case of a joint in two rigid halves and an interposed spring, as in the cited British patent, there is a difference between the initial adherence torque, when the arm of the torque is equal to the radius of the ball joint because of the diametrical play between the two halves of the joint, and the torque once rotated through a small angle, when the arm of the torque is equal to the diameter of the joint because the play between the two halves is cancelled out.

So, the elastic means used in the ball joint according to the invention can be up to only 50% of the force required in the ball joint of the British patent for the same initial torque.

In a preferred embodiment, said means allowing an expansion comprise an opening in the polar region of the bushing and slits extending from said opening through meridians of the surface of the bushing, the bushing being of elastic material.

This construction is simple and allows uniform expansion throughout the whole circumference of the bushing.

Preferably, the first bushing has at least four of said slits, equally distanced from each other.

In one embodiment, the other part of the male element is a second hollow bushing, having a substantially spherical shape, which is rigidly coupled to a support arm of the joint.

Advantageously, the elastic means interposed between the two parts of the male element are made up of a coil spring.

According to one embodiment, the joint comprises at least a first spring support disc, arranged between the spring and the first bushing and which is in contact with said bushing in an area next to the opening in the polar region thereof.

In this way the spring rests firmly against the first bushing and can exercise a uniform force throughout the circumference.

Preferably, the lateral surface of the first support disc is in contact with an edge formed on the inner surface of the first bushing, the contact surface between the first support disc and said bushing being substantially frustoconical.

In one embodiment, said first support disc has at least one annular undercut for housing one end of the spring; in this way the spring is firmly housed and the risk that the spring moves from its working position is avoided.

The lateral surface of the first disc can have two frustoconical surfaces sloping in opposite directions, the first disc being provided with a first annular undercut on one of its faces and a second annular undercut on its other face, said undercuts having a different depth.

This configuration makes it possible to assemble the disc in two ways, wherein the spring remains housed at a different length and consequently exercises a different force.

Preferably, the joint also comprises at least one second spring support disc, arranged between the spring and the second bushing; the lateral surface of the second support disc is advantageously in contact with an edge formed on the inner surface of the second bushing, with the contact surface between the second support disc and said bushing substantially frustoconical.

Moreover, said second support disc can have at least one annular undercut for housing one end of the spring.

The lateral surface of the second disc can have two frustroconical surfaces sloping in the opposite direction, the second disc being provided with a first annular undercut on one of its faces and a second annular undercut on its other face, said undercuts having a different depth

Also in this case the disc can be assembled in two ways, so that the spring can exercise a different force in each case; in combination with the first disc, which can also be assembled in two ways, one and the same spring can be compressed at three different lengths and consequently can produce three different friction torques. In the event the discs were different, there would be four possibilities of compressing the spring.

In one embodiment, the female element completely surrounds the first bushing and at least part of the second bushing, so that the male element made up of the two bushings cannot free itself from the female element.

Preferably, the female element is made up of two substantially equal halves, connected together and to a support arm; the connection between the halves of the female element and the support arm is achieved advantageously by means of pins.

According to a second aspect, this invention relates to a vehicle rear view mirror assembly, characterised in that it comprises a support with at least one ball and socket joint according to the first aspect of the invention.

Preferably, the rear view mirror assembly comprises at least two of said ball and socket joints; in this way the mirror orientation possibilities are increased.

According to another aspect, this invention relates to a vehicle characterised in that it comprises at least one rear view mirror assembly such as has been described.

### Brief description of the drawings

For a better understanding of the above, a series of drawings are attached, which schematically illustrate, only as a non-limiting example, a practical embodiment of the invention.

In which drawings:
Figure 1 is a perspective, broken down view of a ball and socket joint according to the invention;
Figure 2 is a sectional view of the assembled joint;
Figure 3 is a view similar to that of Figure 2, showing the joint with the elements arranged alternatively;
Figure 4 is a view of a rear view mirror support for a vehicle, provided with a joint according to the invention; and
Figure 5 schematically illustrates a rear view mirror support for a vehicle that uses two joints according to the invention.

### Description of preferred embodiments

In the drawings, a ball and socket joint has a female element made up of two halves 10a and 10b that connect together and are fixed to a support arm 20 by means of pins or screws 30. Support arm 20 is intended, in this example, to support the housing of a rear view mirror of a vehicle, such as a bus.

Female element 10a,10b, once connected, encloses a male element made up of a first bushing 40, substantially semi-spherical and hollow, and a second bushing 50, also semi-spherical. The second bushing is joined to a bar 60 which, in turn, is intended to be fixed to the vehicle chassis.

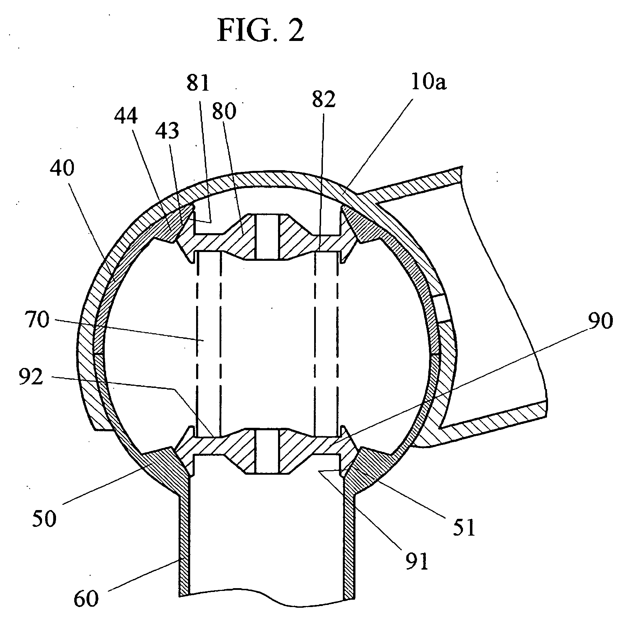

When the ball and socket joint is assembled, as shown in Figure 2, bushings 40 and 50 are arranged next to one another, in contact by means of their equatorial area, and female element 10a, 10b surrounds first bushing 40 and part of second bushing 50, so that the male element made up of the two bushings 40,50 cannot escape from female element 10a, 10b.

The first bushing is made from an elastic material and has an opening 41 in the polar region thereof and four slits 42, equally distanced from one another, and which extend along meridians of bushing 40. Thanks to slits 42 bushing 40 is divided, in the part next to the opening, into four equal sectors.

In the hollow space defined inside the two bushings 40, 50 a coil spring 70 is housed, resting between a first support disc 80 and a second support disc 90.

As can be appreciated in greater detail in Figure 2, first disc 80 is in contact with the first bushing in an area next to opening 41. More precisely, first disc 80 has a substantially frustoconical lateral surface 81 that remains in contact with a complementary surface 43 formed by an edge 44 of the first bushing, next to opening 41.

Disc 80 has an annular undercut 82 forming a seat for an end of spring 70.

The second disc 90 has similar characteristics to first disc 80, such as a frustoconical lateral surface 91 that remains in contact with a complementary surface 51 of the second bushing, and an annular undercut 92 as a seat for the other end of the spring.

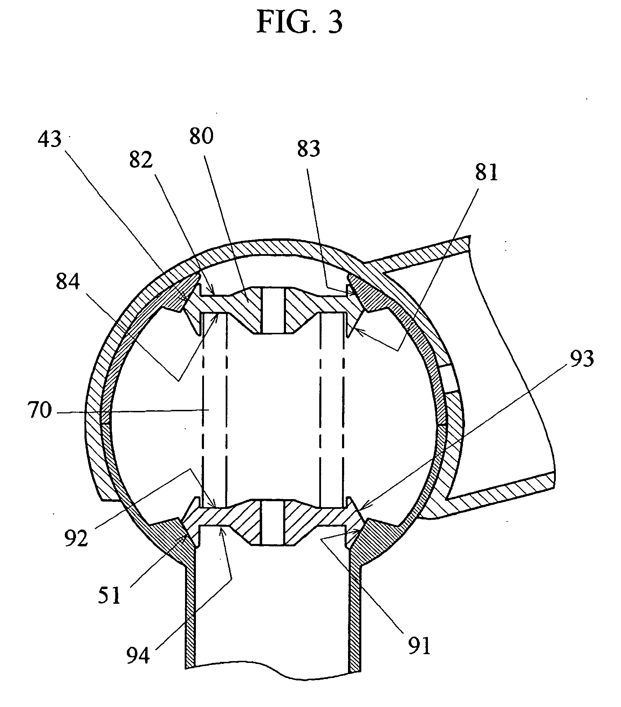

The discs 80 and 90 have a suitable shape for being assembled in two different positions; the details and advantages of this characteristic are described below, with reference to Figure 3, in which disc 80 is shown assembled in an inverted position with respect to that in Figure 2.

As can be seen, disc 80 has two frustoconical surfaces, sloping in opposite directions: in addition to surface 81 already described, the disc has a similar surface 83, sloping in the opposite direction, whereby it can be inverted with respect to Figure 2, in other words, with surface 83 in contact with the corresponding surface 43 of bushing 40.

Moreover, on the surface opposite annular undercut 82 described with reference to Figure 2, the disc has another annular undercut 84, this second undercut being deeper than undercut 82, with respect to the middle plane of the disc.

As a result of the greater depth of undercut 84, when disc 80 is placed in the position shown in Figure 3, the seat of spring 70 is further removed from disc 90 than in the case shown in Figure 2: therefore, the length at which spring 70 is compressed in this case is greater and the force it exercises is less, which implies a reduced friction torque between bushing 40 and the female element.

Disc 90 is similar to disc 80, and also has a second frustoconical surface 93 and a second annular undercut 94: consequently another ball and socket joint assembly possibility exists (not shown), with disc 90 inverted and second undercuts 84 and 94 of discs 80 and 90 opposite each other, so that the length of spring 70 is even greater than in the case shown in Figure 3.

To summarise, the shape of discs 80, 90 makes its possible to assemble the system in three different ways, in the event both discs are equal, or four if they are different, to obtain three or four different friction torques with one and the same spring 70.

Once the assembly is assembled, the spring tends to move bushings 40 and 50 away from one another: thanks to slits 42, and the elasticity of the material, bushing 40 tends to open and a wide circumferential area thereof is pressed against the inner surface of female element 10a, 10b.

Opening 41 and slits 42 therefore form means allowing expansion for bushing 40, in the direction of the female element.

Spring 70 is provided with suitable characteristics for the force that it is desirable to establish between the female element and the male element of the ball joint. The wear of the elements over time, or any thermal expansion, are compensated without the mechanism working loose or seizing.

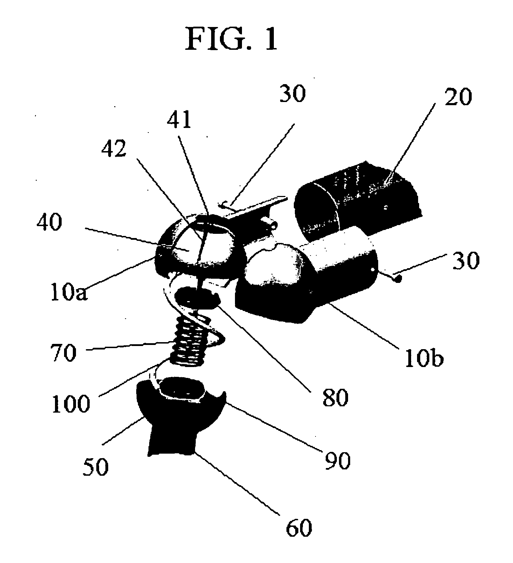

In Figure 1, reference 100 indicates a cable that traverses the ball joint, thanks to the hollow configuration resulting from the shape of male element 40,50, to connect actuators for the mirror movements with their respective control means.

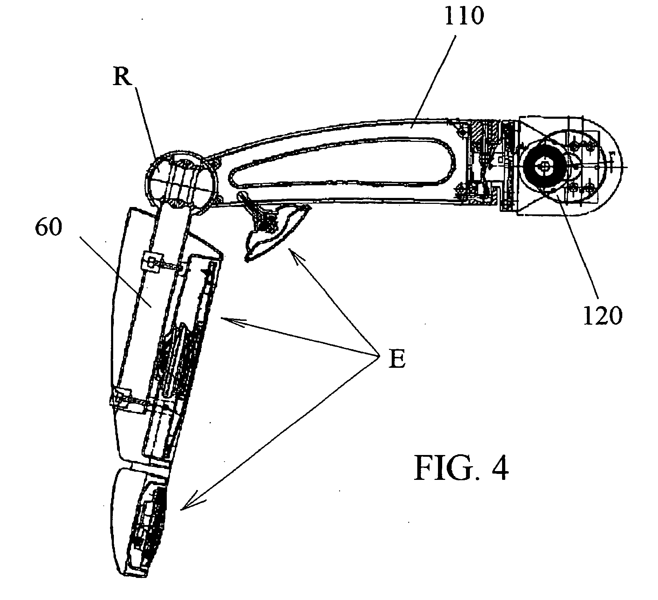

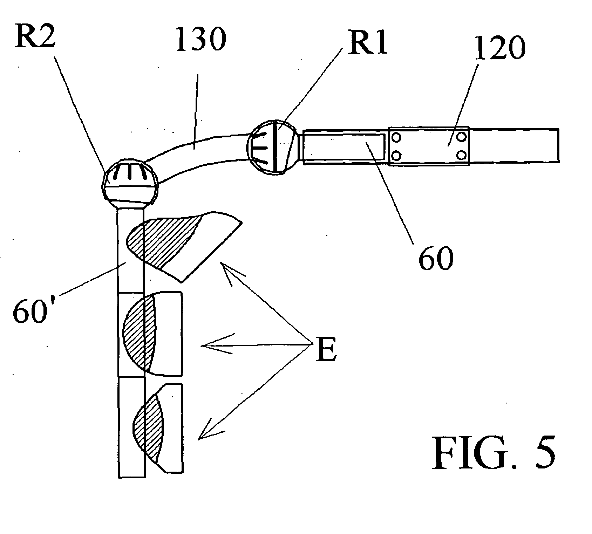

Figures 4 and 5 illustrate two supports for rear view mirrors that use ball and socket joints according to the invention.

Figure 4 illustrates an arm 110 that is attached to the chassis 120 of a vehicle, for example a motorcar, in the conventional way; this attachment can be collapsible.

At the free end of arm 110 the female element of a ball joint R according to the invention is attached. Support arm 60 that is joined to the male element of the R ball joint supports, in this case, two of the rear view mirrors E envisaged for the vehicle.

Figure 5 illustrates a support for rear view mirrors with two ball joints R1 and R2 according to the invention.

In this case, support arm 60 joined to the male element of one of the ball joints R1 is attached to chassis 120 of the vehicle, while support arm 60' joined to the male element of the other ball joint R2 supports the rear view mirrors E; the two ball joints R1 and R2 are connected by means of a section of curved tubing 130 attached to the female elements of both ball joints.

Although a particular embodiment of this invention has been described and illustrated, a person skilled in the art will be able to introduce variations and modifications, or replace details with other technical equivalents, without departing from the scope of protection defined in the attached claims.

For example, although the first bushing is described as an integral part with slits, another alternative system allowing expansion could be envisaged: bushing 40 could be made up of two, three or more parts, either all separated from each other or connected by means of some kind of link.

## Claims

1. A ball and socket joint comprising a male element (40,50), with a substantially spherical external surface, and a female element (10a,10b), that surrounds at least partially the male element and can rotate by sliding thereon, the male element being made up of at least two parts (40,50) independent of each other between which elastic means (70) are arranged which tend to separate the two parts and press them against the female element (10a,10b), one of said parts of the male element being a first hollow bushing (40) having a substantially semi-spherical shape, **characterised in that** said first hollow bushing (40) is expandable by elastic deformation towards the female element (10a,10b) under the action of said elastic means (70).

2. A ball and socket joint according to claim 1, **characterised in that** said at least one configuration allowing expansion of first hollow bushing (40) comprises an opening (41) in the polar region of first hollow bushing (40) and slits (42) extending from said opening (41) along meridians of the surface of first hollow bushing (40), the material of first hollow bushing (40) being sufficiently elastic to permit said elastic deformation.

3. A ball and socket joint according to claim 2, **characterised in that** said first hollow bushing (40) has at least four of said slits (42), equally distanced from each other.

4. A ball and socket joint according to any of the preceding claims, **characterised in that** the other part of the male element is a second hollow bushing (50), with a substantially semi-spherical shape, which is rigidly attached to a support arm (60) of the joint.

5. A ball and socket joint according to any of the preceding claims, **characterised in that** said elastic means (70) placed between the two parts (40,50) of the male element are made up of a coil spring (70).

6. A ball and socket joint according to claim 5, **characterised in that** it comprises at least one first support disc (80) for the spring (70), said support disc (80) being arranged between the spring (70) and the first hollow bushing (40) and in contact with said first hollow bushing (40) in an area next to said opening (41) in the polar region thereof.

7. A ball and socket joint according to claim 6, **characterised in that** a lateral surface (81,83) of the first support disc (80) is in contact with an edge (43) formed on an inner surface of the first hollow bushing (40), a contact surface (43,81;43,83) between the first support disc (80) and said first hollow bushing (40) being substantially frustoconical.

8. A ball and socket joint according to claims 6 or 7, **characterised in that** said first support disc (80) has at least one annular undercut (82,84) for housing one end of the spring (70).

9. A ball and socket joint according to claim 8, **characterised in that** the lateral surface of first the disc (80) has two frustoconical surfaces (81,83) sloping in opposite directions, the first disc (80) being provided with a first annular undercut (82) on one of its faces and a second annular undercut (84) on its other face, said undercuts (82,84) having different depths.

10. A ball and socket joint according to any of claims 5 to 9, **characterised in that** it comprises at least one second support disc (90) for the spring (70), said second support disc (90) being arranged between the spring (70) and the second hollow bushing (50).

11. A ball and socket joint according to claim 10, **characterised in that** a lateral surface (91,93) of the second support disc (90) is in contact with an edge (51) formed on an inner surface of the second hollow bushing (50), a contact surface (51,91;51,93) between the second support disc (90) and said second hollow bushing (50) being substantially frustoconical.

12. A ball and socket joint according to claims 10 or 11, **characterised in that** said second support disc (90) has at least one annular undercut (92,94) for housing one end of the spring (70).

13. A ball and socket joint according to claim 12, **characterised in that** a lateral surface of the second disc (90) has two frustoconical surfaces (91,93) sloping in opposite directions, the second disc (90) being provided with a first annular undercut (92) on one of its faces and a second annular undercut (94) on its other face, said undercuts (92,94) having different depths.

14. A ball and socket joint according to any of the preceding claims, **characterised in that** the female element (10a,10b) completely surrounds the first hollow bushing (40) and at least part of the second hollow bushing (50).

15. A ball and socket joint according to any of the preceding claims, **characterised in that** the female element is made up of two substantially equal halves (10a,10b), connected together and to a support arm (20).

16. A ball and socket joint according to claim 15, **characterised in that** the connection between said halves (10a,10b) of the female element and the support arm (20) is achieved by means of pins (30).

17. A vehicle rear view mirror assembly, **characterised in that** it comprises a support with at least one ball and socket joint according to any of claims 1 to 16.

18. A rear view mirror assembly according to claim 17, **characterised in that** it comprises at least two of said ball and socket joints.

19. A vehicle **characterised in that** it comprises at least one rear view mirror assembly according to any of claims 17 or 18.

## Patentansprüche

1. Kugelgelenk mit einem Steckelement (40, 50) mit im wesentlichen kugelförmiger Außenfläche und einem Aufnahmeelement (10a, 10b), das das Steckelement zumindest teilweise umgibt und auf diesem drehend verschiebbar ist, wobei das Steckelement aus zwei Teilen (40, 50) besteht, die unabhängig voneinander sind und zwischen denen elastische Mittel (70) angeordnet sind, die dazu neigen, die zwei Teile voneinander zu trennen und sie gegen das Aufnahmeelement (10a, 10b) zu drücken, wobei eines der Teile des Steckelements eine erste Hohlbuchse (40) mit im wesentlichen Halbkugelform, **dadurch gekennzeichnet, dass** die erste Hohlbuchse (40) unter Einwirkung der elastischen Mittel (70) durch elastische Deformation in Richtung des Aufnahmeelements (10a, 10b) gedehnt werden kann.

2. Kugelgelenk nach Anspruch 1, **dadurch gekennzeichnet, dass** die zumindest eine Struktur, mit deren Hilfe die erste Hohlbuchse (40) gedehnt werden kann, eine Öffnung (41) im Polbereich der ersten Hohlbuchse (40) und Schlitze (42) aufweist, die sich von der Öffnung (41) entlang der Meridiankreisflächen der ersten Hohlbuchse (40) erstrecken, wobei das Material der ersten Hohlbuchse (40) so elastisch ist, dass es die elastische Deformation ermöglicht.

3. Kugelgelenk nach Anspruch 2, **dadurch gekennzeichnet, dass** die erste Hohlbuchse (40) mindestens vier Schlitze (42) aufweist, die in gleichem Abstand voneinander angeordnet sind.

4. Kugelgelenk nach einem der vorhergehenden Ansprüche, **dadurch gekennzeichnet, dass** das andere Teil des Steckelements eine zweite Hohlbuchse (50) mit im wesentlichen Halbkugelform ist, die fest mit einem Trägerarm (60) des Gelenks verbunden ist.

5. Kugelgelenk nach einem der vorhergehenden Ansprüche, **dadurch gekennzeichnet, dass** die zwischen den zwei Teilen (40, 50) des Steckelements positionierten elastischen Mittel (70) aus einer Schraubenfeder (70) bestehen.

6. Kugelgelenk nach Anspruch 5, **dadurch gekennzeichnet, dass** es zumindest eine Stützscheibe (80) für die Feder (70) aufweist, wobei die Stützscheibe (80) zwischen der Feder (70) und der ersten Hohlbuchse (40) angeordnet ist und in einem Bereich neben der Öffnung (41) in deren Polbereich an der ersten Hohlbuchse (40) anliegt.

7. Kugelgelenk nach Anspruch 6, **dadurch gekennzeichnet, dass** eine Seitenfläche (81, 83) der ersten Stützscheibe (80) an einer an einer Innenfläche der ersten Hohlbuchse (40) ausgebildeten Kante (43) anliegt, wobei eine Anlagefläche (43, 81; 43, 83) zwischen der ersten Stützscheibe (80) und der ersten Hohlbuchse (40) im wesentlichen kegelstumpfförmig ist.

8. Kugelgelenk nach Anspruch 6 oder 7, **dadurch gekennzeichnet, dass** die erste Stützscheibe (80) mindestens einen ringförmigen Einschnitt (82, 84) zur Unterbringung eines Endes der Feder (70) aufweist.

9. Kugelgelenk nach Anspruch 8, **dadurch gekennzeichnet, dass** die Seitenfläche der ersten Scheibe (80) zwei in entgegengesetzter Richtung abgeschrägte Kegelstumpfflächen (81, 83) aufweist, wobei die erste Scheibe (80) an einer ihrer Flächen mit einem ersten ringförmigen Einschnitt (82) und an ihrer anderen Fläche mit einem zweiten ringförmigen Einschnitt (84) versehen ist, wobei die Einschnitte (82, 84) verschieden tief sind.

10. Kugelgelenk nach einem der Ansprüche 5 bis 9, **dadurch gekennzeichnet, dass** es mindestens eine zweite Stützscheibe (90) für die Feder (70) aufweist, wobei die zweite Stützscheibe (90) zwischen der Feder (70) und der zweiten Hohlbuchse (50) angeordnet ist.

11. Kugelgelenk nach Anspruch 10, **dadurch gekennzeichnet, dass** eine Seitenfläche (91, 93) der zweiten Stützscheibe (90) an einer an einer Innenfläche der zweiten Hohlbuchse (50) ausgebildeten Kante (51) anliegt, wobei eine Anlagefläche (51, 91; 51, 93) zwischen der zweiten Stützscheibe (90) und der zweiten Hohlbuchse (50) im wesentlichen kegelstumpfförmig ist.

12. Kugelgelenk nach Anspruch 10 oder 11, **dadurch gekennzeichnet, dass** die zweite Stützscheibe (90) mindestens einen ringförmigen Einschnitt (92, 94) zur Unterbringung eines Endes der Feder (70) aufweist.

13. Kugelgelenk nach Anspruch 12, **dadurch gekennzeichnet, dass** eine Seitenfläche der zweiten Scheibe (90) zwei in entgegengesetzter Richtung abgeschrägte Kegelstumpfflächen (91, 93) aufweist, wobei die zweite Scheibe (90) an einer ihrer Flächen mit einem ersten ringförmigen Einschnitt (92) und an ihrer anderen Fläche mit einem zweiten ringförmigen Einschnitt (94) versehen ist, wobei die Einschnitte (92, 94) verschieden tief sind.

14. Kugelgelenk nach einem der vorhergehenden Ansprüche, **dadurch gekennzeichnet, dass** das Aufnahmeelement (10a, 10b) vollständig die erste Hohlbuchse (40) und zumindest teilweise vollständig die zweite Hohlbuchse (50) umgibt.

15. Kugelgelenk nach einem der vorhergehenden Ansprüche, **dadurch gekennzeichnet, dass** das Aufnahmeelement aus zwei im wesentlichen gleichen Hälften (10a, 10b) besteht, die miteinander und mit einem Trägerarm (20) verbunden sind.

16. Kugelgelenk nach Anspruch 15, **dadurch gekennzeichnet, dass** die Verbindung zwischen beiden Hälften (10a, 10b) des Aufnahmeelements und des Trägerarms (20) durch Bolzen hergestellt wird.

17. Fahrzeugrückspiegelaufbau, **dadurch gekennzeichnet, dass** er einen Halter mit mindestens einem Kugelgelenk nach einem der Ansprüche 1 bis 16 umfasst.

18. Rückspiegelaufbau nach Anspruch 17, **dadurch gekennzeichnet, dass** er mindestens zwei Kugelgelenke umfasst.

19. Fahrzeug, **dadurch gekennzeichnet, dass** es mindestens einen Rückspiegelaufbau nach Anspruch 17 oder 18 umfasst.

## Revendications

1. Une articulation sphérique comportant un élément male (40,50) ayant une surface externe sensiblement sphérique et un élément femelle (10a,10b) qui entoure au moins en partie l'élément male et peut tourner en glissant sur lui, l'élément male étant formé par au moins deux parties (40,50) indépendantes l'une de l'autre entre lesquelles des moyens élastiques (70) sont disposés qui tendent à séparer les deux parties et les presser contre l'élément femelle (10a,10b), une de ces parties de l'élément male étant un premier passage creux (40) ayant une forme sensiblement semi-sphérique, **caractérisée en ce que** ce premier passage creux (40) est extensible par déformation élastique vers l'élément femelle (10a, 10b) sous l'action des moyens élastiques (70).

2. Une articulation sphérique conformément à la revendication 1, **caractérisée en ce que** cette au moins une configuration permettant l'extension du premier passage creux (40) comporte une ouverture (41) dans la région polaire du premier passage creux (40) et des fentes (42) s'étendant de cette ouverture (41) le long de méridiens de la surface du premier passage creux (40), le matériau du premier passage creux (40) étant suffisamment élastique pour permettre cette déformation élastique.

3. Une articulation sphérique conformément à la revendication 2, **caractérisée en ce que** ce premier passage creux (40) a au moins 4 de ces fentes (42) à une distance égale les unes des autres.

4. Une articulation sphérique conformément à une quelconque des revendications précédentes **caractérisée en ce que** l'autre partie de l'élément male est un deuxième passage creux (50) ayant une forme sensiblement semi-sphérique, qui est rigidement reliée à un bras de support (60) de l'articulation.

5. Une articulation sphérique conformément à une quelconque des revendications précédentes, **caractérisée en ce que** ces moyens élastiques (70) placés entre les deux parties (40,50) de l'élément male sont formés par un ressort hélicoïdal (70).

6. Une articulation sphérique conformément à la revendication 5, **caractérisée en ce qu'**elle comporte au moins un premier disque de support (80) pour le ressort (70), ce disque de support (80) étant agencé entre le ressort (70) et le premier passage creux (40) et en contact avec ce premier passage creux (40) dans une région proche à cette ouverture (41) dans sa région polaire.

7. Une articulation sphérique conformément à la revendication 6, **caractérisée en ce qu'**une surface latérale (81,83) du premier disque de support (80) est en contact avec un bord (43) formé sur une surface interne du premier passage creux (40), une surface de contact (43, 81 ; 43,83) entre le premier disque de support (80) et ce premier passage creux (40) étant sensiblement tronconique.

8. Une articulation sphérique conformément aux revendications 6 ou 7, **caractérisée en ce que** ce premier disque de support (80) a au moins un évidement annulaire (82, 84) pour y loger une extrémité du ressort (70).

9. Une articulation sphérique conformément à la revendication 8 **caractérisée en ce que** la surface latérale du premier disque (80) a deux surfaces tronconiques (81,83) en pente dans des directions opposées, le premier disque (80) étant pourvu d'un premier évidement annulaire (82) sur une de ses faces et un deuxième évidement annulaire (84) sur son autre face, ces évidements (82, 84) ayant des hauteurs différentes.

10. Une articulation sphérique conformément à une quelconque des revendications 5 à 9, **caractérisée en ce qu'**elle comporte au moins un deuxième disque de support (90) pour le ressort (70), ce deuxième disque de support (90) étant agencé entre le ressort (70) et le deuxième passage creux (50).

11. Une articulation sphérique conformément à la revendication 10, **caractérisée en ce qu'**une surface latérale (91, 93) du deuxième disque de support (90) est en contact avec un bord (51) formé sur une surface interne du deuxième passage creux (50), une surface de contact (51,91 ;51,93) entre le deuxième disque de support (90) et ce deuxième passage creux (50) étant sensiblement tronconique.

12. Une articulation sphérique conformément aux revendications 10 ou 11, **caractérisée en ce que** ce deuxième support de disque (90) a au moins un évidement annulaire (92,94) pour y loger une extrémité du ressort (70).

13. Une articulation sphérique conformément à la revendication 12, **caractérisée en ce qu'**une surface latérale du deuxième disque (90) a deux surfaces tronconiques (91,93) en pente dans des directions opposées, le deuxième disque (90) étant pourvu d'un premier évidement annulaire (92) sur une de ses faces et un deuxième évidement annulaire (94) sur son autre face, ces évidements (92,94) ayant des hauteurs différentes.

14. Une articulation sphérique conformément à une quelconque des revendications précédentes **caractérisée en ce que** l'élément femelle (10a, 10b) entoure complètement le premier passage creux (40) et au moins une partie du deuxième passage creux (50).

15. Une articulation sphérique conformément à une quelconque des revendications précédentes, **caractérisée en ce que** l'élément femelle est formé par deux moitiés sensiblement égales (10a,10b) reliées ensembles et à un bras de support (20).

16. Une articulation sphérique conformément à la revendication 15, **caractérisée en ce que** la connexion entre ces moitiés (10a, 10b) de l'élément femelle et le bras de support (20) se fait au moyen de chevilles (30).

17. Un ensemble de rétroviseur d'un véhicule **caractérisé en ce qu'**il comporte un support avec au moins une articulation sphérique conformément à une quelconque des revendications 1 à 16.

18. Un ensemble de rétroviseur conformément à la revendication 17, **caractérisé en ce qu'**il comporte au moins deux de ces articulations sphériques.

19. Un véhicule **caractérisé en ce qu'**il comporte au moins un ensemble de rétroviseur conformément à une quelconque des revendications 17 ou 18.
